# EUROPÄISCHE PATENTANMELDUNG

(11) **EP 3 620 693 A1**
(43) Veröffentlichungstag der Anmeldung: **11.03.2020**
(21) Anmeldenummer: 19194120.2
(22) Anmeldetag: 28.08.2019
(51) Int. Cl.: F16J 15/18

(54) **TRIBOLOGISCHER KÖRPER UND VERFAHREN ZUM HERSTELLEN EINES SOLCHEN**

(30) Priorität: 04.09.2018 DE 102018121508
(71) Anmelder: Schunk Kohlenstofftechnik GmbH, 35452 Heuchelheim (DE)
(72) Erfinder: WAHL, Gert, Dr., 35649 Bischoffen (DE); LIDER, Konstantin, 47803 Krefeld (DE); GINGTER, Philipp, Dr., 41066 Mönchengladbach (DE)
(74) Vertreter: Stoffregen, Hans-Herbert

(57) **Zusammenfassung**

Die Erfindung bezieht sich auf einen tribologischen Körper (10), umfassend einen Körper mit Gleitfläche (12) sowie zumindest einen von einem Fluid durchströmbaren Hohlraum. Der der Körper (10) besteht aus einem die Gleitfläche (12) aufweisenden monolithischen ersten Teilkörper (14) und einem mit diesem verbundenen monolithischen zweiten Teilkörper (16), wobei der Hohlraum als Kanal (20) ausgebildet ist, der innerhalb des zweiten Teilkörpers zumindest abschnittsweise verläuft und von diesem zumindest bodenseitig und seitenflächenseitig begrenzt ist.

## Beschreibung

Die Erfindung bezieht sich auf einen tribologischen Körper, wie Lager, Gleitelement, insbesondere Gleitring, umfassend einen Körper mit Gleitfläche sowie zumindest einen von einem Fluid durchströmbaren Hohlraum.

Ein entsprechender tribologischer Körper in Form eines Gleitkörpers ist der DE 32 13 378 C2 zu entnehmen. Der Gleitkörper besteht aus mehreren axial aufeinander gestapelten und aufeinander laminierten, aus Folien oder Karten ausgestanzten Ringen, wobei der unter dem die Gleitfläche bildenden Ring angeordnete Ring sektoral in Umfangsrichtung voneinander getrennte Ausstanzungen zur Bildung von Hohlräumen aufweist, dem gekühlte oder geheizte Flüssigkeit zur elastischen Verformung der Gleitfläche zuführbar ist.

Durch die Geometrie der Hohlräume bedingt ergibt sich ein quasi wellenförmiger Verlauf der Gleitfläche. Unabhängig hiervon sind herstellungstechnische Nachteile gegeben, da eine Vielzahl von Ringen hergestellt werden müssen, um einen Körper zur Verfügung zu stellen, die zudem gegeneinander abgedichtet sein müssen.

Die DE 10 2010 054 113 A1 bezieht sich auf ein Verfahren zur Herstellung einer eine Lamellengeometrie aufweisenden Dichtung, die im generativen Verfahren zur Fixierung von Materialschichten mit einem Hochenergiestrahl hergestellt wird.

Gegenstand der DE 19 82 170 U1 ist eine Gleitringdichtung mit einem Gleitring, der aus einem gut wärmeleitenden Material besteht.

Eine Radialstirnflächendichtung ist aus der DE 29 38 477 A1 bekannt, die eine Dichtungsfläche aufweist, die durch ein auslenkbares elastisches oder elastisch belastetes Element gebildet wird.

Eine Gleitringdichtung nach der DE 31 29 933 A1 weist zwei Gleitringe auf, die von Grundringen ausgehen, in denen Auslasskanäle vorgesehen sind.

Bei der Dichtungsanordnung nach der DE 11 2016 001 155 T5 besteht ein Dichtring aus Kohle oder einem anderen harten Material.

Eine Gasdichtung nach der EP 2 735 777 A1 weist einen aus zwei Teilen bestehenden Gleitköper auf, der gleitseitig aus einem porösen Körper besteht.

Der vorliegenden Erfindung liegt die Aufgabe zugrunde, einen tribologischen Körper bzw. ein Verfahren zur Herstellung eines solchen derart weiterzubilden, dass der Körper mit konstruktiv einfachen Maßnahmen herstellbar ist.

Im Vergleich zum Stand der Technik soll die Gleitflächengeometrie einen gleichmäßigen Verlauf aufweisen.

Zur Lösung der Aufgabe sieht die Erfindung im Wesentlichen vor, dass der Körper aus einem die Gleitfläche aufweisenden monolithischen ersten Teilkörper und einem mit diesem verbundenen monolithischen zweiten Teilkörper besteht oder diese aufweist, wobei der Hohlraum als Kanal ausgebildet ist, der innerhalb des zweiten Teilkörpers zumindest abschnittsweise verläuft und von diesem zumindest bodenseitig und seitenflächenseitig begrenzt ist.

Insbesondere ist vorgesehen, dass der Kanal vollständig innerhalb des zweiten Teilkörpers verläuft.

Dabei ist insbesondere vorgesehen, dass der Körper eine Ring- oder Scheibengeometrie aufweist. Der Kanal bzw. die Kanäle sollten konzentrisch oder in etwa konzentrisch zum Mittelpunkt des Körpers verlaufen.

Der Kanal bzw. die Kanäle sollen zumindest abschnittsweise ringförmig verlaufend ausgebildet sein. In Richtung der Gleitfläche betrachtet ergibt sich eine Ringform oder ringförmige Geometrie bzw. eine Ringabschnittfonn oder ringabschnittförmige Geometrie.

Insbesondere ist vorgesehen, dass der mittlere Radius des Kanals R beträgt und dass der Kanal eine Bogenlänge L von mindestens R x π, vorzugsweise L ≥ 3/2 x R x π, besonders bevorzugt L ≥ 5/3 x R x π , ganz besonders bevorzugt L ≥ 9/5 x R x π aufweist.

Auch besteht die Möglichkeit, dass in dem Körper mehr als ein Kanal verläuft, vorzugsweise zwei Kanäle, die insbesondere parallel oder in etwa parallel zur Gleitfläche verlaufen können.

Selbstverständlich bestünde auch die Möglichkeit, dass der Kanal Windungen eines spiralförmig verlaufenden Kanals ist.

Es besteht jedoch auch die Möglichkeit, dass ein Kanal aus einem ersten und parallel zu diesem verlaufenden zweiten Abschnitt besteht, wobei Ein- und Auslassöffhung des Kanals unmittelbar beabstandet zueinander verlaufen. Weist z.B. der Körper eine Ringgeometrie auf, so sollten Ein- und Auslassöffnung in einer gemeinsamen radialen Ebene verlaufen. Der erste Abschnitt des Kanals kann sodann weitgehend entlang des gesamten Umfangs des Kanals sich erstrecken und wird sodann über einen Bogen in den zweiten Abschnitt zurückgeführt.

Es besteht auch die Möglichkeit, dass mehrere zueinander beabstandete Kanäle ausgebildet werden, um gewünschte Geometrieänderungen durch die Kanäle selbst oder in Abhängigkeit von den die einzelnen Kanäle durchströmenden Fluiden zu erreichen. Die entsprechenden Kanäle können sich dabei entlang eines gemeinsamen Kreises erstrecken.

Durch die erfindungsgemäße Lehre wird insbesondere bei Gleitringen deren Belastbarkeit erhöht. Definierte Spaltgeometrien können eingestellt, Leckagen gesteuert und kritische Betriebszustände, wie Trockenlauf, verhindert werden.

Durch das Durchströmen des Kanals bzw. der Kanäle mit Fluiden gewünschter Temperatur kann eine Kühlung der Dichtung erfolgen. Auch besteht die Möglichkeit, z.B. Viskosität, Schmierfähigkeit und/oder Dampfdruck des Dichtungsmediums zu beeinflussen.

Da erwähntermaßen in dem Körper mehrere zueinander beabstandete Kanäle verlaufen können, kann nicht nur die lokale Steifigkeit des Körpers beeinflusst werden, sondern zusätzlich durch Beaufschlagen der Kanäle mit Fluiden gegebenenfalls voneinander abweichender Temperaturen eine gewünschte Geometrieänderung erzielt werden.

Hervorzuheben ist des Weiteren, dass ein Kanal mit einem Phasenwechselmaterial gefüllt sein kann. Dies ist insbesondere dann von Vorteil, wenn der Körper in Form eines Gleitringes im Start-Stopp-Betrieb benutzt wird, so dass die Dichtungsbedingungen auf Dauer konstant gehalten werden können.

Es besteht auch die Möglichkeit, dass in dem Körper bei der Verwendung als Gleitring zumindest ein radialer oder geneigt zur Radialen verlaufender, insbesondere im zweiten Teilkörper ausgebildeter, Kanal verläuft, dem eine Reinigungsflüssigkeit zugeführt werden kann, um insbesondere in der lebensmittelverarbeitenden oder pharmazeutischen Industrie ein Reinigen bzw. Sterilisieren durchzuführen, also sogenanntes CIP (Cleaning in Place) oder SIP (Sterilization in Place) durchzuführen.

Abweichend vom Stand der Technik wird ein tribologischer Körper zur Verfügung gestellt, in dem zumindest ein Kanal verläuft, der von einem Fluid durchströmbar ist, um im gewünschten Umfang die Gleitflächengeometrie aufgrund des in dem Kanal strömenden Fluids durch die temperaturabhängige Dehnung des monolithischen Teilkörpers einzustellen und somit die Gleitflächengeometrie gezielt zu beeinflussen. Es folgt keine punktuelle Beaufschlagung über einzelne Hohlräume, wie dies der Stand der Technik vorsieht, sondern über einen Kanal, der sich bevorzugterweise entlang des gesamten oder nahezu gesamten Umfangs des Körpers erstreckt, so dass eine gleichmäßige Gleitflächengeometriebeeinflussung erfolgt.

Eigenerfinderisch zeichnet sich die Erfindung dadurch aus, dass der erste und der zweite Teilkörper einen gleichen Wärmeausdehnungskoeffizienten und/oder eine gleiche Wärmeleitfähigkeit aufweisen.

Der Wärmeausdehnungskoeffizient (linearer Wärmeausdehnungskoeffizient) sollte bei 20°C im Bereich zwischen 2,0 K⁻¹ (K = Kelvin) und 5,0 K⁻¹ liegen, insbesondere in etwa 3,9 K⁻¹ oder in etwa 3,9 K⁻¹ betragen.

Die Wärmeleitfähigkeit in W/(m x K) (W = Watt, m = Meter, K = Kelvin) bei der Temperatur T = 20 °C sollte im Bereich von 100 bis 220 liegen, insbesondere 150 oder in etwa 150 betragen.

Dadurch, dass der Körper aus den zwei monolithischen Teilkörpern besteht, die miteinander verbunden sind und nach dem Verbinden im Bezug auf Ausdehnung und Wärmeleitfähigkeit einen Monolithen bilden, ist ein einfaches Herstellungsverfahren gegeben. Da nur zwei Teilkörper vorhanden sind, in denen der Kanal bzw, die Kanäle verlaufen bzw. den Kanal bzw. die Kanäle begrenzen, ist eine einfache Abdichtung möglich.

Daher ist insbesondere auch vorgesehen, dass der erste Teilkörper den Kanal oder die Kanäle begrenzt, wobei selbstverständlich die Möglichkeit gegeben ist, dass der Kanal bzw. die Kanäle abschnittsweise in dem ersten Teilkörper verlaufen oder zumindest der Kanal oder zumindest einer der Kanäle sich vollständig innerhalb des zweiten Teilkörpers erstreckt.

In Weiterbildung sieht die Erfindung vor, dass der erste und/oder der zweite Teilkörper aus einem Material aus der Gruppe Keramik, Metall, kunstharzgebundener Kohlenstoff, Kohlenstoff-Graphitwerkstoff, Elektrographit, Faserverbundwerkstoff, insbesondere Siliziumcarbid, Wolframcarbid, Aluminiumoxid, Siliziumnitrid besteht.

Bevorzugterweise ist vorgesehen, dass der zweite Teilkörper, vorzugsweise der erste und der zweite Teilkörper aus reaktionsgebundenem Siliziumcarbid besteht oder dieses enthält.

Insbesondere sind der erste und der zweite Teilkörper durch Silizieren, insbesondere Kapillarsilizieren miteinander verbunden. Auch kann ein Kleben oder Löten der Teilkörper erfolgen, alternativ oder ergänzend zu dem Silizieren.

Insbesondere ist vorgesehen, dass zum Verbinden der Teilkörper diese in ihren Kontaktflächen form- und kraftschlüssig verbunden sind, um sodann das Silizieren durchzuführen. Es besteht jedoch auch die Möglichkeit, auf zumindest eine Kontaktfläche ein Verbindungsmaterial aufzutragen, das insbesondere eine Paste ist, das Polyvinylalkohol und Siliziumpulver enthält, wobei der Anteil des Siliziums zwischen 30 Gew.-% und 60 Gew.-% betragen sollte. Erfolgt das Aufschmelzen des Siliziums unter Vakuum oder in Schutzgasatmosphäre, kann eine Versprödung bzw. Zunahme der Porosität im Bereich der Verbindungszone weitestgehend vermieden werden. Sofern das Verbindungsmaterial neben dem Silizium Kohlenstoff, z.B. in Form von Ruß, enthält, ist es möglich, den relativen Anteil des Siliziums, der mit dem Kohlenstoff zu Siliziumkarbid reagiert, möglichst zu maximieren, so dass der Anteil an freiem Silizium in der Verbindungszone entsprechend minimiert wird. Hierdurch ergibt sich der Vorteil, wenn der erfindungsgemäße Körper, wie tribologische Körper, bei hohen Temperaturen eingesetzt wird, ein Aufschmelzen des freien Siliziums in der Verbindungszone bei und damit ein Ausscheiden des Siliziums mit gleichzeitiger Schwächung der Verbindungszone verhindert wird. Außerdem bildet der Kohlenstoff bei dem Reaktionsbrand zusammen mit den Silizium sekundäres Siliziumkarbid, das zur Verfestigung des Durchdringungsverbundes führt.

Das Verbindungsmaterial kann aber auch ein pastenförmiger Kleber sein, der aus einem oder mehreren organischen Bindemitteln, wie Polysacchariden, Ligninsulfonaten, Polyvinylalkoholen oder Reaktionsharzen, wie Furanen und Phenolen, sowie einem oder mehreren funktionalen Füllstoffen, wie Kohlenstoff in Form von Ruß- oder Graphitpulver, Siliziumpulver, Siliziumkarbidpulver besteht.

Andere Verbindungsarten sind selbstverständlich auch möglich.

Ferner zeichnet sich die Erfindung dadurch aus, dass der erste Teilkörper aus einem Material mit einer Körnung besteht, dessen mittlere Korngröße kleiner als die des zweiten Teilkörpers ist, der insbesondere eine Körnung mit einem Anteil von 95% an Siliziumcarbid und einer mittleren Korngröße von 70µm bis 200µm aufweist. Die entsprechenden Werte beziehen sich auf das Ausgangsmaterial.

Die Ausgangskörnung des Materials des ersten Teilkörpers, insbesondere von Siliziumcarbid und/oder Borcarbid, kann eine mittleren Korngröße von 5 µm bis 70 µm aufweisen.

In Weiterbildung der Erfindung ist vorgesehen, dass der Kanal Bereiche voneinander abweichender Querschnitte und/oder in Bezug auf die Gleitfläche unterschiedliche maximale Abstände zu dieser aufweist. Durch diesbezügliche Geometrieänderungen bzw. Geometrieverläufe des Kanals bzw. der Kanäle kann eine weitere gezielte Beeinflussung der Gleitflächengeometrie erreicht werden, um den tribologischen Körper gezielt auf dessen Anwendungsbereiche auszubilden.

Ein Verfahren zur Herstellung eines tribologischen Körpers, wie Lager, Gleitelement, insbesondere Gleitring, umfasst insbesondere die Verfahrensschritte
- Herstellung eines eine Gleitfläche aufweisenden monolithischen ersten Teilkörpers,
- Herstellung eines monolithischen zweiten Teilkörpers mit zumindest einem integrierten Kanal oder Abschnitt eines solchen und
- Zusammensetzen des ersten Teilkörpers mit dem zweiten Teilkörper und verbinden dieser.

Wird von Kanal im Singular gesprochen, so wird hierdurch die Möglichkeit eingeschlossen, dass mehr als ein Kanal in dem tribologischen Körper verläuft. Insbesondere besteht dabei die Möglichkeit, dass zwei Kanäle konzentrisch zueinander verlaufen, bevorzugterweise in einer Ebene, die sich parallel oder in etwa parallel zur Gleitfläche erstreckt.

Insbesondere ist vorgesehen, dass der zweite Teilkörper derart hergestellt wird, dass der Kanal zumindest abschnittsweise vollständig innerhalb des zweiten Teilkörpers verläuft.

Auch ist durch die Erfindung abgedeckt, dass der in dem zweiten Teilkörper verlaufende Kanal zur Begrenzungsfläche, an den der erste Teilkörper angrenzt, offen ist, und der erste Teilkörper somit den Kanal verschließt.

Das Verbinden erfolgt oder wird unterstützt insbesondere durch ein Flüssigsilizierverfahren, wie Auflage-, Docht- und Tauchtränkung, und zwar insbesondere in situ.

Hervorzuheben ist des Weiteren, dass der zweite Teilkörper durch ein additives Verfahren hergestellt werden kann, das auch als generatives Fertigungsverfahren bezeichnet wird.

Dabei kann ein Binder Jetting-Verfahren benutzt werden, also ein Verfestigen von Pulvermaterial mittels Bindern.

Andere additive Verfahren, wie selektives Laserschmelzen, selektives Lasersintern oder Elektronenstrahlschmelzen können gleichfalls benutzt werden.

Insbesondere ist vorgesehen, dass der zweite Teilkörper im additiven Verfahren mittels eines 3D- Druckers hergestellt wird, der insbesondere nach dem Laserdruck- oder Multi-Jet-Modeling-Verfahren arbeitet, wobei ein schichtweises Aufbauen vorzugsweise in Schichtstärken von 100 µm bis 500 µm erfolgt.

Als Material für den ersten und/oder zweiten Teilkörper wird insbesondere verwendet ein Material aus der Gruppe Keramik, Metall, kunstharzgebundener Kohlenstoff, Kohlenstoff-Graphitwerkstoff, insbesondere Siliziumcarbid, Borcarbid, Wolframcarbid, Aluminiumoxid, Siliziumnitrid, Elektrographit, Faserverbundwerkstoff.

Vorzugsweise ist vorgesehen, dass der zweite Teilkörper derart hergestellt wird, dass der Kanal zumindest abschnittsweise zumindest vollständig innerhalb des zweiten Teilkörpers verläuft.

Der erste Teilkörper wird insbesondere unter Berücksichtigung der Verfahrensschritte hergestellt:
- Herstellen einer Ausgangssubstanz in Form von Granulat oder Paste oder Schlicker enthaltend Siliziumkarbidpulver, Kohlenstoffpulver und Binder,
- Herstellen eines Vorkörpers aus der Ausgangssubstanz durch keramisches Formgebungsverfahren, wie Schlickergießen, Strangpressen, Trockenpressen, isostatisches Pressen, Foliengießen, Spritzgießen,
- Entformen des Vorkörpers und Bearbeiten diesen vorzugsweise auf nahezu Endmaß,
- Silizieren des Vorkörpers und anschließendes Endbearbeiten z.B. durch Sandstrahlen oder Schleifen, wobei insbesondere das Silizieren nach zuvor erfolgtem Kontaktieren des ersten Teilkörpers (14) mit dem mit diesem zu verbindenden zweiten Teilkörper durchgeführt wird.

Sofern der zweite Teilkörper im additiven Verfahren hergestellt wird, ist insbesondere vorgesehen, dass nach dem additiven Verfahren erfolgten Herstellen eines Vorkörpers, für den als Ausgangsmaterialien SiC-Pulver und Binder verwendet werden, der Vorkörper aus der benutzten Vorrichtung herausgenommen und Restpulver entfernt wird, ein gegebenenfalls mehrfaches Tränken in einer Rußsuspension oder ein Kohlenstoffeintrag mittels Chemical Vapor Infiltration (CVI) mit Pyrokohlenstoff erfolgt, um sodann in Kontakt mit flüssigem oder gasförmigem Silizium und anschließendem Reaktionsbrand den Vorkörper in den Silizium infiltriertes Siliziumcarbid (SiSiC) aufweisenden zweiten Teilkörper unter Bildung von sekundärem Siliziumcarbid zu überführen.

Dabei erfolgt das Silizieren insbesondere bei gleichzeitigem Verbinden mit dem ersten Formteil, wie zuvor erläutert worden ist.

Anschließend erfolgt eine Endbearbeitung. Dies kann mittels Sandstrahlen und Schleifen durchgeführt werden.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von der Zeichnung zu entnehmen bevorzugten Ausführungsbeispielen.

Es zeigen:
- Fig. 1: eine erste Ausführungsform eines Gleitrings,
- Fig. 2: einen Schnitt entlang A-A in Fig. 1,
- Fig. 3: einen Schnitt entlang B-B in Fig. 4,
- Fig. 4: ein Detail X in Fig 2,
- Fig. 5: eine zweite Ausführungsform eines Gleitrings,
- Fig. 6: einen Schnitt entlang A-A in Fig 5,
- Fig. 7: eine dritte Ausführungsform eines Teilkörpers eines Gleitrings,
- Fig. 8: ein Schnitt der Linie A-A in Fig. 7,
- Fig. 9 a, b: Prinzipdarstellungen von Gleitringdichtungsanordnungen und
- Fig. 10 a, b: Prinzipdarstellungen der statischen Gleitringdichtungen gem. Fig. 7 a, b ohne und mit Fluiddurchströmung.

In den Figuren, in denen grundsätzlich gleiche Elemente mit gleichen Bezugszeichen versehen sind, sind tribologische Körper in Form von Gleitringdichtungen rein prinzipiell dargestellt, ohne dass hierdurch die erfindungsgemäß Lehre eingeschränkt werden soll. Vielmehr gilt diese für tribologische Körper allgemein, deren Gleitflächen temperiert, insbesondere gekühlt, ggf. aber auch vorgeheizt, werden sollen, insbesondere um die Lebensdauer zu erhöhen.

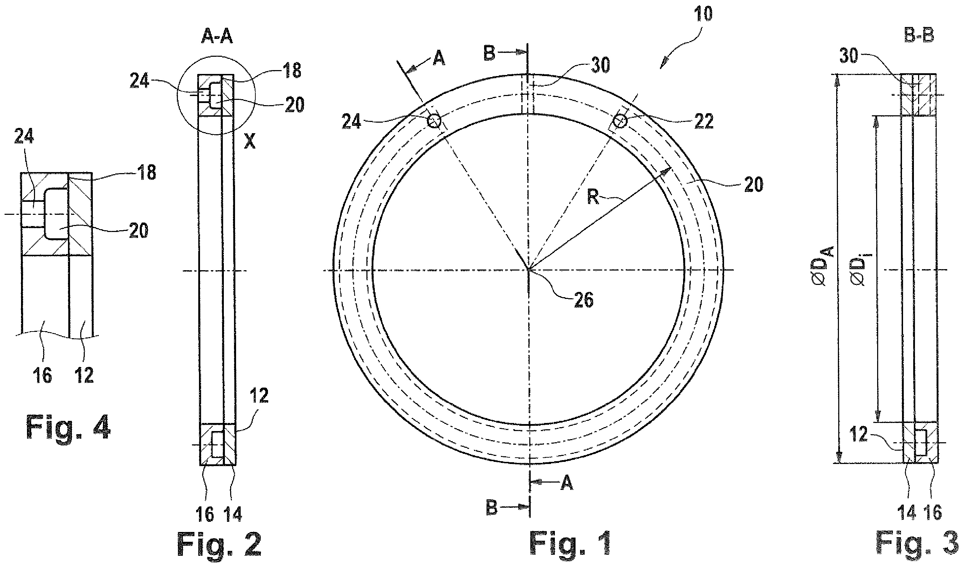

In Fig. 1 ist eine erste Ausführungsform eines Gleitrings 10 dargestellt, der aus einem eine Gleitfläche 12 aufweisenden ersten Teilkörper 14 und einem mit diesem verbundenen zweiten Teilkörper 16 besteht. Der erste und zweite Teilkörper 14, 16 sind als Monolith ausgebildet. Der zusammengesetzte Gleitring 10 selbst bildet wiederum quasi einen Monolithen, da die Materialien des ersten und zweiten Teilkörpers 14, 16 derart aufeinander abgestimmt sind, dass gleiche Wärmeleitfähigkeiten und gleiche Wärmeausdehnungskoeffizienten vorliegen.

Insbesondere sind der erste und zweite Teilkörper 14, 16 aus reaktionsgebundenem Siliziumkarbid hergestellt, wobei die Teilkörper 14, 16 bezüglich der Ausgangskörnung voneinander abweichen können, insbesondere vor dem Hintergrund, dass der erste Teilkörper 14 tribologische Eigenschaften aufweisen soll und der zweite Teilkörper 16 im additiven oder generativen Herstellungsverfahren hergestellt werden soll.

Zum Verbinden des ersten und zweiten Teilkörpers 14, 16 werden diese in situ durch Flüssigsilizieren miteinander verbunden. Zusätzlich kann zwischen den aufeinanderliegenden Flächen ein Kleber vorgesehen sein. Andere Verbindungsarten sind gleichfalls möglich.

Vorzugsweise ist vorgesehen, dass das Löten, also das Verbinden der Teilköper 14, 16 miteinander, mittels einer Silizium enthaltenden Paste erfolgt.

Zur Herstellung einer stoffschlüssigen Verbindung zwischen den Teilkörpern 14, 16 wird vorzugsweise ein Silizium enthaltendes Verbindungsmaterial äußerlich auf die Kontaktflächen der zu verbindenden Teilkörper 14, 16 aufgetragen. Anschließend erfolgt ein Aufschmelzen des Verbindungsmaterials. Als besonders vorteilhaft hat sich ein Verbindungsmaterial gezeigt, das als Paste ausgebildet ist und Polyvinylalkohol und Siliziumpulver enthält. Der Anteil an Silizium sollte zwischen 30 Gew.-% und 60 Gew.% betragen. Erfolgt das Aufschmelzen des Siliziums unter Vakuum oder in einer Schutzgasatmosphäre, kann vorteilhafterweise eine Versprödung bzw. eine Zunahme der Porosität im Bereich der Verbindungszone weitestgehend verhindert werden. Wird dem Verbindungsmaterial neben Silizium ein Rußanteil hinzugefügt, ist es möglich, den relativen Anteil des Siliziums, der mit dem Kohlenstoff zu Siliziumkarbid reagiert, möglichst zu maximieren, so dass der Anteil an freiem Silizium einer Verbindungszone entsprechend minimiert wird. Dies erweist sich insoweit als Vorteil, sofern der aus dem ersten und zweiten Teilkörper bestehende Körper, wie tribologischer Körper, bei Temperaturen eingesetzt wird, die etwa ab 1.400 °C ein Aufschmelzen des freien Siliziums in der Verbindungszone und damit ein Ausscheiden des Siliziums mit gleichzeitiger Schwächung der Verbindungszone verhindert. Außerdem bildet der Kohlenstoff bei dem Reaktionsbrand zusammen mit dem Silizium sekundäres Siliziumkarbid, das zur Verfestigung des Durchdlingungsverbundes führt, wie bereits beim Brand selber erwünscht, da stabilisierend ist.

Verfahrenstechnisch kann insbesondere wie folgt vorgegangen werden. Vorzugsweise werden beide zu kontaktierende Flächen mit einem Beschichtungsmaterial versehen. Sodann werden die Kontaktflächen kraft- und formschlüssig verbunden. Der Kraftschluss kann dabei ausschließlich schwerkraftbedingt erfolgen. Anschließend erfolgt ein Aufheizen auf eine Temperatur oberhalb von 1.400 °C in einer Schutzgasatmosphäre, wobei das Siliziumpulver aufschmilzt. Sofern in dem Verbindungsmaterial Kohlenstoff enthalten ist, reagiert das Silizium zu Siliziumkarbid. Das Ergebnis dieser Reaktion ist die Ausbildung der Verbindung, die mit zunehmendem Abstand von einer zwischen den Komponenten, also den Kontaktflächen gebildeten Grenzschicht einen abnehmenden sekundären Siliziumkarbidgehalt aufweist. Der Kohlenstoff bewirkt, dass eine ausreichende Benetzung des primären Siliziumkarbids mit flüssigem Silizium sichergestellt ist.

Es kann jedoch auch ein Kleber, insbesondere in Form einer Paste, benutzt werden, der ein oder mehrere organische Bindemittel, wie Polysaccharide, Ligninsulfonate, Polyvinylalkohol oder Reaktionsharz, wie Furane und Phenole, sowie ein oder mehrere funktionale Füllstoffe, wie Kohlenstoff in Form von Ruß- oder Graphitpulver, Siliziumpulver, Siliziumkarbidpulver enthält.

Andere Verbindungsarten sind erwähntermaßen gleichfalls möglich.

Insbesondere wird zur Herstellung des zweiten Teilkörpers eine Siliziumkarbidkörnung 100/F, deren Korngrößenverteilung sich mit den Werten D10 : 75 µm, D50 : 115 µm, D90 : 160 µm beschreiben lässt und ein Bindemittel, wie Furanharz, im additiven Verfahren schichtweise aufgebaut. Anschließend erfolgt eine Tränkung mit einer wässrigen Rußsuspension. Die Rußsuspension besteht aus 30 Gew.-% Ruß und enthält neben einem Dispergiermittel auf Polyelektrolytbasis ein Netzmittel. Letzteres führt dazu, dass die Rußsuspension beim Trocknen auf die Körner des porösen Formkörpers aus Siliziumkarbid bzw. dessen Struktur eine erste Rußschicht aufzieht, ohne dass im Zwischenraum eine Koagulation auftritt. Hierdurch ist sichergestellt, dass auch bei einem mehrmaligen Tränken ein ausreichend durchströmbarer Porenraum zur Verfügung steht. Anschließend erfolgt ein Reaktionsbrand mit infiltriertem Silizium, das in den verbleibenden Porenraum eintritt und zur Bildung von sekundärem Siliziumkarbid gegenüber dem primären Siliziumkarbid der Körnung führt. Das Silizieren erfolgt durch Kapillar- oder Flüssigkeitssilizieren, insbesondere mittels Auflage-, Docht- oder Tauchtränkung.

Die Herstellung des Formkörpers kann insbesondere mittels Laserdruck- oder Multijet-Modeling-Verfahren durchgeführt werden. Dabei kann ein schichtweiser Aufbau des Formkörpers mit Schichtstärken von 100 µm bis 500 µm erfolgen.

Durch das additive Verfahren besteht die Möglichkeit, in dem zweiten Teilkörper 16 im gewünschten Umfang zumindest einen Kanal auszubilden, der entsprechend dem Ausführungsbeispielen boden- und seitenumfangsseitig innerhalb des zweiten Teilkörpers 16 verläuft und dessen offene Seite von der dem zweiten Teilkörper 16 zugewandten Fläche 18 des ersten Teilkörpers 14 abgedeckt wird. Der Kanal ist mit dem Bezugszeichen 20 gekennzeichnet und weist an seinem Ende eine Zulauf- bzw. Auslassöffnung 22, 24 auf, um den Kanal 18 von einem Fluid gewünschter Temperatur durchströmen zu können.

Wie sich aus der zeichnerischen Darstellung ergibt, verläuft der Kanal 20 koaxial zum Mittelpunkt 26 des eine Kreisringform aufweisenden Gleitrings 10. Der Kanal 20, der in Draufsicht die Form eines Kreisringabschnitts oder in etwas eines Kreisringabschnitts besitzt, weist dabei einen mittleren Radius R auf.

Der Außendurchmesser DA des Gleitrings 10 kann z.B. 200 mm und der Innendurchmesser DI 160 mm betragen. Der mittlere Durchmesser 2R des Kanals 20 kann 180 mm betragen. Der Gleitring 10 kann eine Dicke von z.B. 18 mm aufweisen. Die Dicke des ersten Teilkörpers 12 sollte in etwa die Hälfte der des zweiten Teilkörpers 16 betragen. All diese Werte sind jedoch nicht schutzeinschränkend zu verstehen.

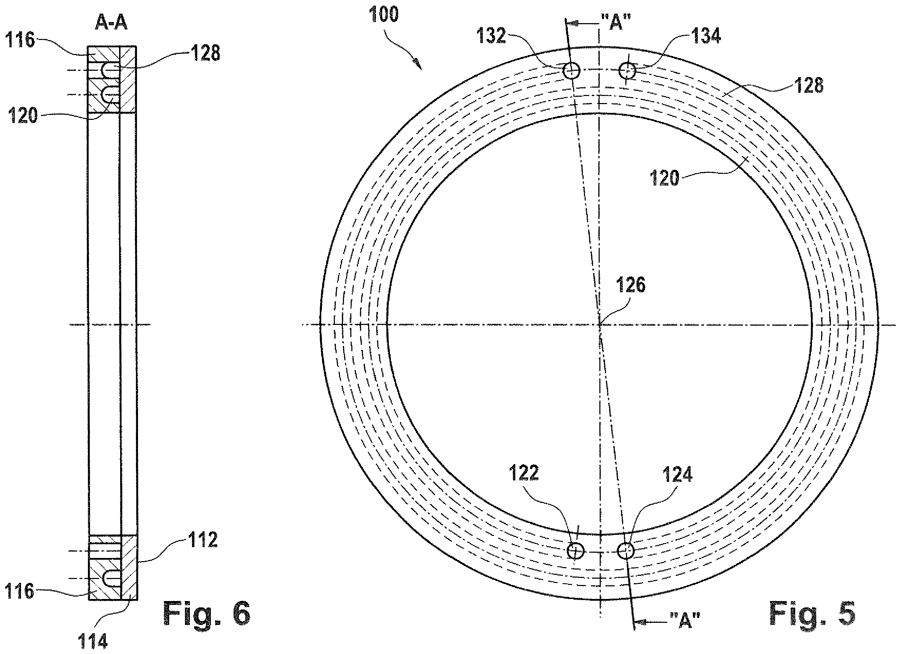

In Fig. 5 und 6 ist eine zweite Ausführungsform eines Gleitrings 100 dargestellt, die sich von dem des Ausführungsbeispiels der Fig. 1 bis 4 dahingehend unterscheidet, dass in einem zweiten Teilkörper 116 zwei Kanäle 118, 128 vorhanden sind, die konzentrisch zueinander und konzentrisch zum Mittelpunkt 126 des Gleitrings 10 verlaufen. Jeder Kanal 118, 128 weist eine Ein- und Auslassöffnung 122, 124 bzw. 132, 134 auf. Die Kanäle 118, 128 werden - wie bei dem Ausführungsbeispiel der Fig. 1 bis 4 - von dem ersten Teilkörper 112 abgedeckt.

In Draufsicht weisen die Kanäle 118, 128 die Geometrie eines kreisringförmigen Segments auf.

Anzumerken ist, dass der bzw. die Kanäle 18, 118, 128 vollständig in dem zweiten Teilkörper 16, 116 oder teilweise sowohl in dem zweiten Teilkörper 16, 116 und in dem ersten Teilkörper 12, 112 verlaufen können.

Auch besteht die Möglichkeit, dass der Querschnitt der Kanäle 18, 118, 128 oder der maximale Abstand zwischen jeweiliger Bodenfläche des Kanals 18, 118, 128 als auch der Gleitfläche 12, 112 des Gleitrings 10, 100 in Längsrichtung des jeweiligen Kanals 20, 120, 128 variieren kann, um gezielt eine Temperaturbeeinflussung in der Gleitfläche 12, 112 zu ermöglichen.

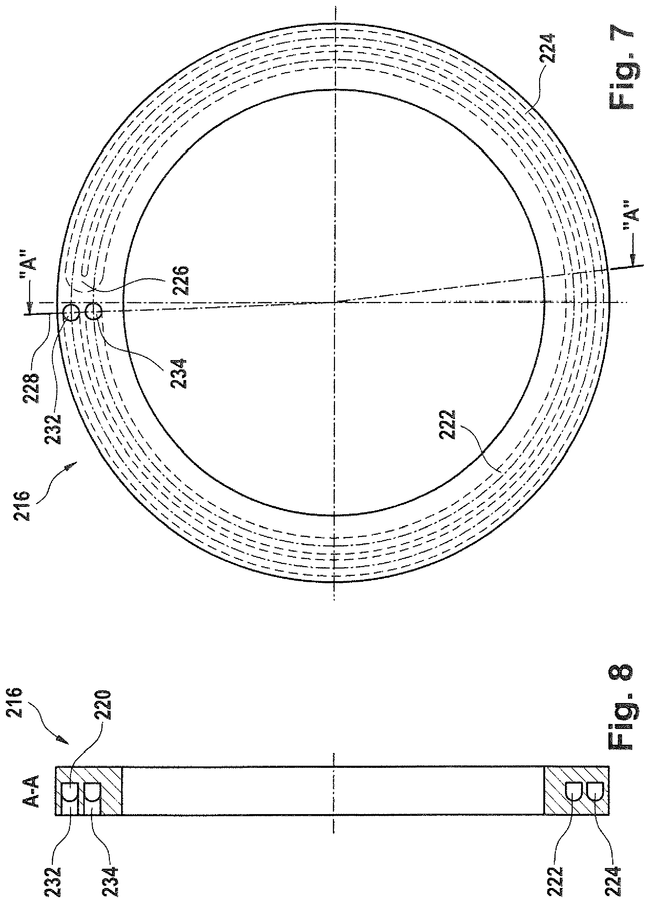

Den Fig. 7 und 8 ist eine weitere Ausführungsform eines zweiten Teilkörpers 216 zu entnehmen, der einen Kanal 220 aufweist, der in zwei Teilabschnitte 222, 224 unterteilt ist, die über einen Bogen 226 miteinander verbunden sind.

Die Teilabschnitte 222, 224 erstrecken sich nahezu entlang des gesamten Umfangs des eine Ringgeometrie aufweisenden zweiten Körpers 216. In einer Radialebene 228, also unmittelbar benachbart zueinander, verlaufen Einlassöffnung 232 und Auslassöffnung 234. Durch die diesbezügliche Ausbildung des Kanals 220 erfolgt eine Vergleichmäßigung der Temperatur über den gesamten Umfang des Teilkörpers 220, wobei zum Wärmeaustausch zwischen den Abschnitten 222, 224 die guten wärmeleitenden Eigenschaften des Siliziumkarbids mit genutzt werden.

Der erste Teilkörper 12, 112 ist insbesondere ein reaktionsgebundener Silizium infiltrierter Siliziumkarbidkörper mit einem Poren aufweisenden Gefüge. Die geschlossenen Makroporen weisen ein Volumen von weniger 8 Vol.-% des ersten Teilkörpers 12, 112 auf. Der Durchmesser der Makroporen liegt zwischen 0,05 µm und 70 µm.

Das Siliziumkarbid in Pulverform wird mit Kohlenstoffpulver und Binder gemischt. Dabei kann Granulat, eine Paste oder ein Schlicker hergestellt werden. Sodann wird durch keramische Formgebung, und zwar in Abhängigkeit von der Ausgangssubstanz, durch Schlickergießen, Strangpressen, Trockenpressen, isostatisches Pressen, Foliengießen ein auch als Grünkörper zu bezeichnender Formkörper hergestellt werden. Das Siliziumkarbid weist dabei eine Korngrößenverteilung zwischen 0,1 µm und 300 µm auf.

Nach dem Entformen erfolgt eine Vorbearbeitung auf nahezu Endmaß. Anschließend kann der Vorkörper in Kontakt mit im Überschuss vorhandenen flüssigen oder gasförmigen Silizium gebrannt werden. Der so hergestellte Formkörper weist ein spezifisches Gewicht von mehr als 2,8 g/cm³, insbesondere zwischen 2,8 g/cm³ und 3,2 g/cm³, auf.

Alternativ kann das Silizieren unter Schutzgas zusammen mit dem Verbinden des zweiten Teilkörpers 16, 116 durchgeführt werden, wie dies zuvor erläutert worden ist.

Der erste Teilkörper 12 sollte - wie der zweite Teilkörper 14 - im Wesentlichen aus reaktionsgebundenem Siliziumkarbid bestehen, wobei als Ausgangsmaterial Siliziumkarbidkörner einer Größenverteilung wie folgt benutzt werden können:
D10 : 14 µm
D50 : 29 µm
D90 : 48 µm

Das Siliziumkarbid wird mit einem Bindemittel, wie Furanharz, gemischt und sodann zur Bildung einer Vorform des ersten Teilkörpers 12 isostatisch oder uniaxial gepresst. Anschließend erfolgt ein Entbindern und Vorbearbeiten, z.B. mittels Fräsens und/oder Schleifens. Sodann wird der erste Teilkörper 14 mit dem zweiten Teilkörper 16 verbunden, wobei Flüssigkeitssilizierverfahren zum Einsatz gelangen kann. Anschließend erfolgt eine Endbearbeitung.

Aufgrund der Ausbildung der Kanäle in dem Gleitring 10, 100 und das Durchströmen der Kanäle 20, 120, 128, 220 mit einem Fluid, insbesondere Flüssigkeit einstellbarer Temperatur, besteht die Möglichkeit, dass die Gleitfläche 12, 112 gezielt gekühlt werden kann, um gewünschte Gleitflächengeometrien einstellen zu können.

Bei der Ausbildung von zwei Kanälen, wie bei dem Ausführungsbeispiel der Fig. 5 und 6, können Einlass- und Auslassöffnungen diametral oder in etwa diametral gegenüberliegen. So kann z.B. über die Öffnungen 122, 134 Kühlfluid in die Kanäle 120, 128 eingeleitet und über die Öffnungen 124, 132 abgeführt werden. Hierdurch ergibt sich der Vorteil, dass eine Vergleichmäßigung der Fluidtemperatur aufgrund des guten Wärmeübergangs in dem zweiten Teilkörper 105, 114 erfolgt. Hierdurch ist zusätzlich sichergestellt, dass eine gewünschte Gleitflächengeometrie eingestellt werden kann.

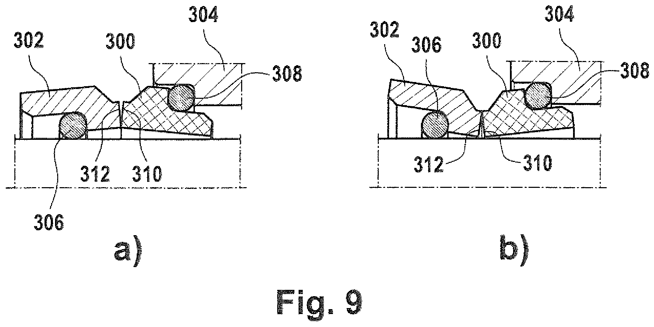

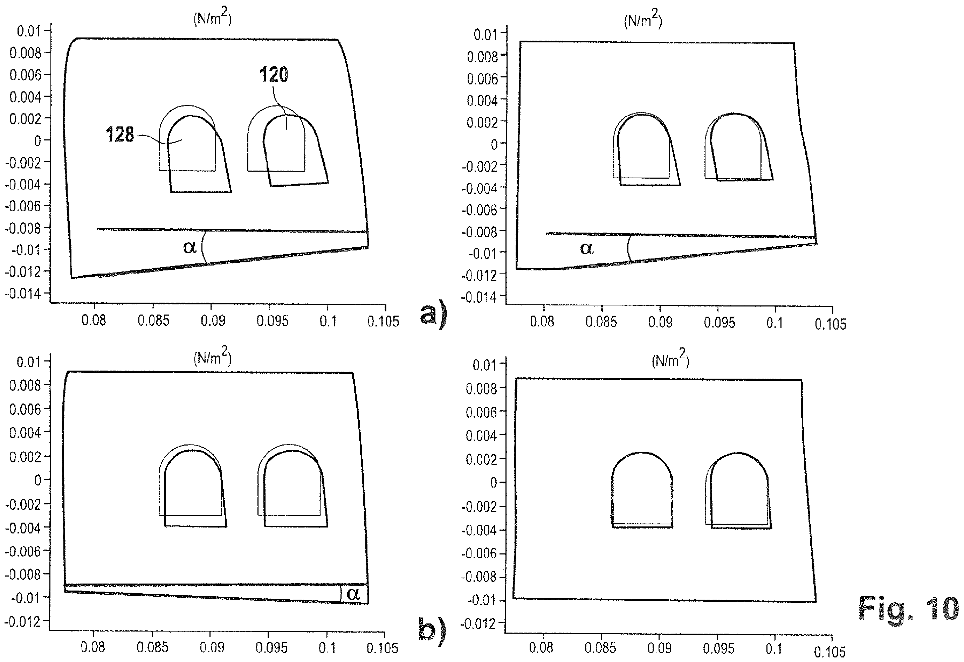

Dass durch die Beaufschlagung des bzw. der Kanäle 20, 120, 128 mit einem Fluid gewünschter Temperatur der Verlauf der Gleitfläche beeinflusst wird, soll anhand der Fig. 9 und 10 verdeutlicht werden.

In Fig. 9 ist rein prinzipiell eine Gleitringdichtanordnung dargestellt, die einen Gleitring 300 und einen Gegenring 302 aufweist, der z.B. verdrehgesichert mit einer Welle verbunden ist. Der Gleitring 300 ist seinerseits verdrehgesichert z.B. gegenüber einem Gehäuse 304 befestigt. Über die Dichtungen 306, 308 sind der Gleitring 300 bzw. der Gegenring 302 gegenüber der Welle bzw. dem Gehäuse 304 abgedichtet. Die einander gegenüberliegenden Dichtflächen 310, 312 des Gleitrings 300 bzw. des Gegenrings 302 bilden einen Dichtspalt, der gemäß Fig. 9a eine V-Geometrie und gemäß Fig. 9b eine A-Geometrie aufweisen kann, ungeachtet hoch präziser Bearbeitung der Dichtflächen. Erfindungsgemäß wird der Spaltwinkel zwischen den Dichtflächen 310, 312 durch Beaufschlagen des bzw. der Kanäle 20, 120, 128 derart beeinflusst, dass der Spaltwinkel α kontrolliert wird: entweder erhöht oder reduziert. Im Ausführungsbeispiel wird der Spaltwinkel α reduziert, wie anhand der Fig. 10a und 10b verdeutlicht wird. Diesen Darstellungen liegen Finite Elemente Simulationen zugrunde. In der linken Darstellung von Fig. 10a wird der Öffnungswinkel α für den V-Spalt und in der Fig. 10b in der linken Darstellung der für den A-Spalt dargestellt, wobei die rein prinzipiell dargestellten Kanäle 120, 128 von einem Kühlfluid nicht durchströmt sind. Erfolgt ein Durchströmen, so reduziert sich der Winkel α, wie die rechte Darstellung von Fig. 10a verdeutlicht. Bezüglich des A-Spaltes wird sogar der Spalt beseitigt.

Durch die erfindungsgemäße Lehre ergibt sich eine Vielzahl von Vorteilen, von denen einige nachstehend erläutert werden sollen.

Durch die Ausbildung des oder der Kanäle kann im gewünschten Umfang eine Kühlung einer Dichtung und die Viskosität und andere temperaturabhängigen Parameter von einem Dichtungsmedium beeinflusst werden.

Eine weitere Möglichkeit aufgrund der erfindungsgemäßen Lehre besteht darin, dass z. B. eine Dichtung vor Inbetriebnahme erwärmt wird.

Die Geometrie der Gleitfläche kann eingestellt werden, wobei insbesondere dann, wenn mehrere in Umfangsrichtung zueinander beabstandete Kanäle vorhanden sind, die lokale Steifigkeit des Bauteils beeinflusst werden kann bzw. gewünschte Geometrieänderungen können erzielt werden.

Es besteht auch die Möglichkeit, einen oder den Kanal mit einem Phasenwechselmaterial, wie Paraffin, zu füllen, um insbesondere beim Start-Stopp-Betrieb die Dichtungsbedingungen auf Dauer konstant zu halten.

Es besteht auch die Möglichkeit, einen radialen oder geneigt zur Radialrichtung verlaufenden, insbesondere weiteren, Kanal auszubilden, der Begrenzungsflächen des Körpers durchsetzt und mit einem Reinigungs- oder Sterilisationsmedium beaufschlagt werden kann, um ein Reinigen bzw. Sterilisieren vorzunehmen, ein sogenanntes CIP (Cleaning in Place) bzw. SIP (Sterilazation in Place). Dabei sollte der Kanal insbesondere parallel zur Gleitfläche verlaufen.

Ein entsprechendes einer Durchgangsöffnung gleichkommender Reinigungskanal 30 ist in den Fig. 1, 3 eingezeichnet.

Die Erfindung zeichnet sich durch nachfolgende Merkmale aus, und zwar isoliert oder im gewünschten Umfang zumindest wahlweise in Kombination:
- Tribologischer Körper, wie Lager, Gleitelement, insbesondere Gleitring, umfassend einen Körper mit Gleitfläche sowie zumindest einen von einem Fluid durchströmbaren Hohlraum, wobei der Körper aus einem die Gleitfläche aufweisenden monolithischen ersten Teilkörper und einem mit diesem verbundenen monolithischen zweiten Teilkörper besteht oder diese aufweist, und wobei der Hohlraum als Kanal ausgebildet ist, der innerhalb des zweiten Teilkörpers zumindest abschnittsweise verläuft und von diesem zumindest bodenseitig und seitenflächenseitig begrenzt ist;
- der erste Teilkörper begrenzt den Kanal;
- der Kanal verläuft abschnittsweise in dem zweiten Teilkörper;
- der Körper weist eine Ring- oder Scheibengeometrie auf und/oder der Kanal bzw. die Kanäle verläuft bzw. verlaufen konzentrisch oder in etwa konzentrisch zum Mittelpunkt des Körpers;
- der mittlere Radius des Kanals R beträgt und der Kanal weist eine Bogenlänge L von mindestens R x π, vorzugsweise L ≥ 3/2 x R x π, besonders bevorzugt L ≥ 5/3 x R x π , ganz besonders bevorzugt L ≥ 9/5 x R x π auf;
- in dem Körper, insbesondere in dem zweiten Teilkörper, sind mehrere zueinander beabstandete Kanäle ausgebildet, die sich entlang eines gemeinsamen Kreises erstrecken;
- der Kanal weist die Geometrie einer ebenen Spirale auf;
- der Körper weist zwei Kanäle mit Ein- und Auslassöffnungen auf, wobei die Einlassöffnung des einen Kanals diametral oder in etwa diametral zu der Einlassöffnung des anderen Kanals verläuft und vorzugsweise der Abstand von Ein- und Auslassöffnung eines jeden Kanals eine Bogenlänge KB mit KB ≤ 2/5 x R x π, vorzugsweise KB ≤ 1/5 x R x π aufweist;
- der Kanal besteht aus einem ersten und parallel zu diesem verlaufenden zweiten Abschnitt, wobei Ein- und Auslassöffnung des Kanals unmittelbar benachbart zueinander verlaufen;
- der erste und/oder zweite Teilkörper besteht aus einem Material aus der Gruppe Keramik, Metall, kunstharzgebundener Kohlenstoff, Kohlenstoff-Graphitwerkstoff, Elektrographit, Faserverbundwerkstoff, insbesondere Siliziumcarbid, Wolframcarbid, Aluminiumoxid, Siliziumnitrid, vorzugsweise reaktionsgebundenes Siliziumcarbid;
- der erste und der zweite Teilkörper weist einen gleichen Wärmeausdehnungskoeffizienten und/oder eine gleiche Wärmeleitfähigkeit auf;
- der zweite Teilkörper besteht aus reaktionsgebundenem, mit Silizium infiltriertem Siliziumcarbid und/oder Borcarbid, wobei das Siliziumcarbid und/oder Borcarbid eine Korngrößenverteilung d₁₀ = 75 µm, d₅₀ = 115 µm, d₉₀ = 160 µm aufweist;
- der erste Teilkörper besteht aus reaktionsgebundenem, mit Silizium infiltriertem Siliziumcarbid und/oder Borcarbid besteht, wobei das Siliziumcarbid und/oder Borcarbid insbesondere eine mittlere Korngröße zwischen 5 µm und 70 µm und/oder eine Korngrößenverteilung D10 = 14 µm, D50 = 29 µm, D90 = 48 µm aufweist;
- der erste Teilkörper besteht aus reaktionsgebundenem, mit Silizium infiltriertem Siliziumcarbid und/oder Borcarbid und weist geschlossene Makroporen mit einem Porenvolumen < 8 Vol.-% auf;
- Durchmesser DP der Makroporen beträgt 0,05 µm ≤ DP ≤ 70 µm;
- der erste Teilkörper weist eine Dichte ≥ 2,8 g/cm³, insbesondere zwischen 2,8 g/cm³ und 3,2 g/cm³, auf;
- der erste Teilkörper ist durch Schlickergießen, Strangpressen, Trockenpressen, isostatisches Pressen, Foliengießen, Spritzgießen hergestellt;
- der zweite Teilkörper ist im additiven Verfahren hergestellt;
- in dem zumindest einen Kanal ist ein Phasenwechselmaterial eingebracht;
- der tribologische Körper, insbesondere der zweite Teilkörper, ist von zumindest einer radial oder unter einem Winkel zur Radialen geneigten Durchgangsöffnung durchsetzt, die insbesondere parallel zur Gleitfläche verläuft.

Verfahren zur Herstellung eines tribologischen Körpers wie Lager, Gleitelement, insbesondere Gleitring, umfassend die Verfahrensschritte
- Herstellen eines eine Gleitfläche aufweisenden monolithischen ersten Teilkörpers,
- Herstellen eines monolithischen zweiten Teilkörpers mit zumindest einem integrierten Kanal oder Abschnitt eines solchen und
- Fügen des ersten Teilkörpers mit dem zweiten Teilkörper;
- der zumindest eine Kanal wird zumindest boden- und seitenflächenseitig innerhalb des zweiten Teilkörpers ausgebildet, und verläuft vorzugsweise vollständig in dem zweiten Teilkörper;
- der zumindest eine Kanal wird von dem zweiten Teilkörper begrenzt;
- der zweite Teilkörper wird durch ein additives Herstellungsverfahren hergestellt;
- der zweite Teilkörper wird derart hergestellt, dass der Kanal zumindest abschnittsweise vollständig innerhalb des zweiten Teilkörpers verläuft;
- der erste Teilkörper wird mit dem zweiten Teilkörper durch Flüssigsilizieren verbunden;
- zum Verbinden des ersten Teilkörpers mit dem zweiten Teilkörper werden diese in ihren miteinander zu verbindenden Kontaktflächen während des Silizierens kraft- und formschlüssig verbunden;
- auf zumindest einer der Kontaktflächen wird ein Verbindungsmaterial aufgetragen, das insbesondere pastös ist;
- als Verbindungsmaterial wird ein solches verwendet, das Polyvinylalkohol und Siliziumpulver enthält, dessen Gewichtsanteil vorzugsweise 30 % bis 60 % beträgt;
- zum Verbinden des ersten Teilkörpers mit dem zweiten Teilkörper wird auf zumindest einer der Kontaktflächen ein Kleber aufgetragen, der vorzugsweise pastenförmig ausgebildet ist und vorzugsweise aus einem oder mehreren organischen Bindemitteln, wie Polysacharide, Ligninsulfonate, Polyvinylalkohol oder Reaktionsharz, wie Furane und Phenole, sowie einem oder mehreren funktionalen Füllstoffen, wie Kohlenstoff, vorzugsweise in Form von Ruß- oder Graphitpulver, Siliziumpulver, Siliziumkarbidpulver besteht;
- dem Verbindungsmaterial wird Kohlenstoff, vorzugsweise in Form von Ruß, hinzugefügt;
- zum Verbinden des ersten Teilkörpers mit dem zweiten Teilkörper werden diese auf eine Temperatur T mit T ≥ 1.350 °C, insbesondere T ≥ 1.400 °C erwärmt;
- zur Herstellung des ersten Teilkörpers werden zumindest folgende Verfahrensschritte durchgeführt:
   - Herstellen einer Ausgangssubstanz in Form von Granulat oder Paste oder Schlicker enthaltend Siliziumkarbidpulver, Kohlenstoffpulver und Binder,
   - Herstellen eines Vorkörpers aus der Ausgangssubstanz durch keramisches Formgebungsverfahren, wie Schlickergießen, Strangpressen, Trockenpressen, isostatisches Pressen, Foliengießen, Spritzgießen,
   - Entformen des Vorkörpers und Bearbeiten diesen, vorzugsweise auf nahezu Endmaß,
   - Silizieren des Vorkörpers und anschließendes Endbearbeiten z.B. durch Sandstrahlen oder Schleifen,
   wobei insbesondere das Silizieren nach zuvor erfolgtem Kontaktieren des ersten Teilkörpers mit dem mit diesem zu verbindenden zweiten Teilkörper durchgeführt wird;
- nach der Herstellung des zweiten Teilkörpers im additiven Verfahren wird dieser mit Kohlenstoff versetzt, insbesondere durch Tränkung in einer Rußsuspension oder durch Chemical Vapor Infiltration (CVI) mit Pyrokohlenstoff;
- das Silizieren wird in situ beim Verbinden mit dem zweiten Teilkörper durchgeführt;
- der zweite Teilkörper wird im additiven Verfahren mittels eines 3D- Druckers hergestellt, der insbesondere nach dem Laserdruck- oder Multi-Jet-Modeling-Verfahren arbeitet, wobei ein schichtweises Aufbauen vorzugsweise in Schichtstärken von 100 µm bis 500 µm erfolgt;
- als Material für den ersten Teilkörper und/oder den zweiten Teilkörper wird ein Material aus der Gruppe Keramik, Metall, kunstharzgebundener Kohlenstoff, Kohlenstoff-Grafitwerkstoff, Elektrographit, Verbundwerkstoff, insbesondere Siliziumcarbid, Wolframcarbid, Aluminiumoxid, Siliziumnitrid, vorzugsweise reaktionsgebundenes Siliziumcarbid verwendet.

## Patentansprüche

1. Tribologischer Körper (10, 100), wie Lager, Gleitelement, insbesondere Gleitring, umfassend einen Körper mit Gleitfläche (12, 112) sowie zumindest einen von einem Fluid durchströmbaren Hohlraum,
**dadurch gekennzeichnet,**
**dass** der Körper (10, 100) aus einem die Gleitfläche (12, 112) aufweisenden monolithischen ersten Teilkörper (14, 114) und einem mit diesem verbundenen monolithischen zweiten Teilkörper (16, 116, 216) besteht oder diese aufweist, wobei der Hohlraum als Kanal (20, 120, 128, 220) ausgebildet ist, der innerhalb des zweiten Teilkörpers zumindest abschnittsweise verläuft und von diesem zumindest bodenseitig und seitenflächenseitig begrenzt ist.

2. Tribologischer Körper nach Anspruch 1,
**dadurch gekennzeichnet,**
**dass** der erste Teilkörper (14, 114) den Kanal (20, 120, 128, 220) begrenzt,

3. Tribologischer Körper nach Anspruch 1 oder 2,
**dadurch gekennzeichnet,**
**dass** der Körper (10, 100) eine Ring- oder Scheibengeometrie aufweist und dass der Kanal (20, 120, 128, 220) bzw. die Kanäle in Richtung der Gleitfläche (12, 14) betrachtet eine Ringform oder ringförmige Geometrie oder eine Ringabschnittform oder ringabschnittförmige Geometrie aufweist bzw. aufweisen, insbesondere konzentrisch oder in etwa konzentrisch zum Mittelpunkt (26, 126) des Körpers (10, 100) verläuft bzw. verlaufen.

4. Tribologischer Körper nach zumindest einem der vorhergehenden Ansprüche, **dadurch gekennzeichnet,**
**dass** der mittlere Radius des Kanals R beträgt und dass der Kanal (20, 120, 128, 220) eine Bogenlänge L von mindestens R x π, vorzugsweise L ≥ 3/2 x R x π,
besonders bevorzugt L ≥ 5/3 x R x π, ganz besonders bevorzugt L ≥ 9/5 x R x π aufweist.

5. Tribologischer Körper nach zumindest einem der vorhergehenden Ansprüche, **dadurch gekennzeichnet,**
**dass** in dem Körper (10, 100), insbesondere in dem zweiten Teilkörper (16, 116), mehrere zueinander beabstandete Kanäle ausgebildet sind, die sich entlang eines gemeinsamen Kreises erstrecken.

6. Tribologischer Körper nach zumindest einem der vorhergehenden Ansprüche, **dadurch gekennzeichnet,**
**dass** der Kanal die Geometrie einer ebenen Spirale aufweist.

7. Tribologischer Körper nach zumindest einem der vorhergehenden Ansprüche, **dadurch gekennzeichnet,**
**dass** der Körper (100) zwei Kanäle (120, 128) mit Ein- und Auslassöffnungen (122, 124, 132, 134) aufweist, wobei die Einlassöffnung des einen Kanals diametral oder in etwa diametral zu der Einlassöffnung des anderen Kanals verläuft und vorzugsweise der Abstand von Ein- und Auslassöffnung eines jeden Kanals eine Bogenlänge KB mit KB ≤ 2/5 x R x π, vorzugsweise KB ≤ 1/5 x R x π aufweist.

8. Tribologischer Körper nach zumindest einem der vorhergehenden Ansprüche, **dadurch gekennzeichnet,**
**dass** der Kanal (20, 220) aus einem ersten und parallel zu diesem verlaufenden zweiten Abschnitt (222, 224) besteht, wobei Ein- und Auslassöffnung (232, 234) des Kanals unmittelbar benachbart zueinander verlaufen.

9. Tribologischer Körper nach zumindest einem der vorhergehenden Ansprüche, **dadurch gekennzeichnet,**
**dass** der erste und/oder zweite Teilkörper (14, 16, 114, 116) aus einem Material aus der Gruppe Keramik, Metall, kunstharzgebundener Kohlenstoff, Kohlenstoff-Graphitwerkstoff, Elektrographit, Faserverbundwerkstoff, insbesondere Siliziumcarbid, Wolframcarbid, Aluminiumoxid, Siliziumnitrid, vorzugsweise reaktionsgebundenes Siliziumcarbid besteht.

10. Tribologischer Körper nach zumindest einem der vorhergehenden Ansprüche, **dadurch gekennzeichnet,**
**dass** der erste und der zweite Teilkörper (14, 16, 114, 116) einen gleichen Wärmeausdehnungskoeffizienten und/oder eine gleiche Wärmeleitfähigkeit aufweisen.

11. Tribologischer Körper nach zumindest einem der vorhergehenden Ansprüche, **dadurch gekennzeichnet,**
**dass** der zweite Teilkörper (16, 116, 216) aus reaktionsgebundenem, mit Silizium infiltriertem Siliziumcarbid und/oder Borcarbid besteht, wobei das Siliziumcarbid und/oder Borcarbid eine Korngrößenverteilung d₁₀ = 75 µm, d₅₀ = 115 µm, d₉₀ = 160 µm aufweist und /oder dass der erste Teilkörper (14, 114) aus reaktionsgebundenem, mit Silizium infiltriertem Siliziumcarbid und/oder Borcarbid besteht, wobei das Siliziumcarbid und/oder Borcarbid insbesondere eine mittlere Korngröße zwischen 5 µm und 70 µm und/oder eine Korngrößenverteilung D10 = 14 µm, D50 = 29 µm, D90 = 48 µm aufweist, und vorzugsweise geschlossene Makroporen mit einem Porenvolumen < 8 Vol.-% aufweist, wobei insbesondere Durchmesser DP der Makroporen beträgt 0,05 µm ≤ DP ≤ 70 µm, und wobei vorzugsweise der erste Teilkörper (14, 114) eine Dichte ≥ 2,8 g/cm³, insbesondere zwischen 2,8 g/cm³ und 3,2 g/cm³, aufweist.

12. Tribologischer Körper nach zumindest einem der vorhergehenden Ansprüche, **dadurch gekennzeichnet,**
**dass** der erste Teilkörper (14, 114) durch Schlickergießen, Strangpressen, Trockenpressen, isostatisches Pressen, Foliengießen, Spritzgießen hergestellt ist, und/oder dass der zweite Teilkörper (16, 116) im additiven Verfahren hergestellt ist.

13. Tribologischer Körper nach zumindest einem der vorhergehenden Ansprüche, **dadurch gekennzeichnet,**
**dass** in dem zumindest einen Kanal ein Phasenwechselmaterial eingebracht ist.

14. Tribologischer Körper nach zumindest einem der vorhergehenden Ansprüche, **dadurch gekennzeichnet,**
**dass** der tribologische Körper, insbesondere der zweite Teilkörper (16, 116), von zumindest einer radial oder unter einem Winkel zur Radialen geneigten Durchgangsöffnung (30) durchsetzt ist, die insbesondere parallel zur Gleitfläche (12 112) verläuft.

15. Verfahren zur Herstellung eines tribologischen Körpers (10, 100) wie Lager, Gleitelement, insbesondere Gleitring, umfassend die Verfahrensschritte
- Herstellen eines eine Gleitfläche (12, 112) aufweisenden monolithischen ersten Teilkörpers (14, 114),
- Herstellen eines monolithischen zweiten Teilkörpers (16, 116) mit zumindest einem integrierten Kanal (20, 120, 128) oder Abschnitt eines solchen und
- Fügen des ersten Teilkörpers mit dem zweiten Teilkörper.

16. Verfahren nach Anspruch 15,
**dadurch gekennzeichnet,**
**dass** der zumindest eine Kanal (20, 120, 128) zumindest boden- und seitenflächenseitig innerhalb des zweiten Teilkörpers (16, 116) ausgebildet wird, und vorzugsweise vollständig in dem zweiten Teilkörper verläuft, und/oder dass der zumindest eine Kanal (20, 120, 128) von dem zweiten Teilkörper (16, 116) begrenzt wird.

17. Verfahren nach zumindest einem der Anspruch 15 und 16,
**dadurch gekennzeichnet,**
**dass** der zweite Teilkörper (16, 116) durch ein additives Herstellungsverfahren hergestellt wird, wobei vorzugsweise der zweite Teilkörper (16, 116) derart hergestellt wird, dass der Kanal (20, 120, 128) zumindest abschnittsweise vollständig innerhalb des zweiten Teilkörpers verläuft.

18. Verfahren nach zumindest einem der Ansprüche 15 bis 17,
**dadurch gekennzeichnet,**
**dass** der erste Teilkörper (14, 114) mit dem zweiten Teilkörper (16, 116) durch Flüssigsilizieren verbunden wird, wobei insbesondere zum Verbinden des ersten Teilkörpers (14, 114) mit dem zweiten Teilkörper (16, 116) diese in ihren miteinander zu verbindenden Kontaktflächen während des Silizierens kraft- und formschlüssig verbunden werden, und wobei vorzugsweise auf zumindest einer der Kontaktflächen ein Verbindungsmaterial aufgetragen wird, das insbesondere pastös ist, wobei bevorzugterweise als Verbindungsmaterial ein solches verwendet wird, dass Polyvinylalkohol und Siliziumpulver enthält, dessen Gewichtsanteil vorzugsweise 30 % bis 60 % beträgt, wobei vorzugsweise dem Verbindungsmaterial Kohlenstoff, vorzugsweise in Form von Ruß, hinzugefügt wird.

19. Verfahren nach zumindest einem der Ansprüche 21 bis 29,
**dadurch gekennzeichnet,**
**dass** zum Verbinden des ersten Teilkörpers (14, 114) mit dem zweiten Teilkörper (16, 116) auf zumindest einer der Kontaktflächen ein Kleber aufgetragen wird, der vorzugsweise pastenförmig ausgebildet ist und vorzugsweise aus einem oder mehreren organischen Bindemitteln, wie Polysacharide, Ligninsulfonate, Polyvinylalkohol oder Reaktionsharz, wie Furane und Phenole, sowie einem oder mehreren funktionalen Füllstoffen, wie Kohlenstoff, vorzugsweise in Form von Ruß- oder Graphitpulver, Siliziumpulver, Siliziumkarbidpulver besteht.

20. Verfahren nach zumindest einem der Ansprüche 15 bis 19,
**dadurch gekennzeichnet,**
**dass** zum Verbinden des ersten Teilkörpers (14, 114) mit dem zweiten Teilkörper (16, 116) diese auf eine Temperatur T mit T ≥ 1.350 °C, insbesondere T ≥ 1.400 °C erwärmt wird.

21. Verfahren nach zumindest einem der Ansprüche 15 bis 20,
**dadurch gekennzeichnet,**
**dass** zur Herstellung des ersten Teilkörpers (14, 114) zumindest folgende Verfahrensschritte durchgeführt werden:
- Herstellen einer Ausgangssubstanz in Form von Granulat oder Paste oder Schlicker enthaltend Siliziumkarbidpulver, Kohlenstoffpulver und Binder,
- Herstellen eines Vorkörpers aus der Ausgangssubstanz durch keramisches Formgebungsverfahren, wie Schlickergießen, Strangpressen, Trockenpressen, isostatisches Pressen, Foliengießen, Spritzgießen,
- Entformen des Vorkörpers und Bearbeiten diesen, vorzugsweise auf nahezu Endmaß,
- Silizieren des Vorkörpers und anschließendes Endbearbeiten z.B. durch Sandstrahlen oder Schleifen,
wobei insbesondere das Silizieren nach zuvor erfolgtem Kontaktieren des ersten Teilkörpers (14) mit dem mit diesem zu verbindenden zweiten Teilkörper (16, 116) durchgeführt wird,
wobei vorzugsweise nach der Herstellung des zweiten Teilkörpers (16, 116) im additiven Verfahren dieser mit Kohlenstoff versetzt wird, insbesondere durch Tränkung in einer Rußsuspension oder durch Chemical Vapor Infiltration (CVI) mit Pyrokohlenstoff, und wobei vorzugsweise das Silizieren in situ beim Verbinden mit dem zweiten Teilkörper (16, 116) durchgeführt wird.

22. Verfahren nach zumindest einem der Ansprüche 15 bis 21,
**dadurch gekennzeichnet,**
**dass** der zweite Teilkörper (16, 116) im additiven Verfahren mittels eines 3D-Druckers hergestellt wird, der insbesondere nach dem Laserdruck- oder Multi-Jet-Modeling-Verfahren arbeitet, wobei ein schichtweises Aufbauen vorzugsweise in Schichtstärken von 100 µm bis 5.00 µm erfolgt.
